# EUROPÄISCHE PATENTSCHRIFT

(11) **EP 0 563 563 B1**
(45) Veröffentlichungstag und Bekanntmachung des Hinweises auf die Patenterteilung: **19.07.1995**
(21) Anmeldenummer: 93102697.5
(22) Anmeldetag: 20.02.1993
(51) Int. Cl.: B64D 9/00, B64C 1/20

(54) **Vorrichtung zur Führung**
Guiding device
Dispositif de guidage

(30) Priorität: 01.04.1992 DE 4210702
(43) Veröffentlichungstag der Anmeldung: 06.10.1993
(73) Patentinhaber: Daimler-Benz Aerospace Airbus Gesellschaft mit beschränkter Haftung, 21129 Hamburg (DE)
(72) Erfinder: Vogg, Günter, W-2800 Bremen (DE); Eilenstein, Wilfried, W-2805 Stuhr (DE)
(74) Vertreter: Hansmann, Dierk, Dipl.-Ing.

(56) Entgegenhaltungen:
- DE-C- 4 102 274
- FR-A- 2 240 176
- FR-A- 2 374 249
- US-A- 3 796 397

## Beschreibung

Die Erfindung betrifft eine Vorrichtung zur Führung von Paletten unterschiedlicher Größe im Bereich einer Ladefläche eines Frachtraumes eines Flugzeuges.

Derartige Vorrichtungen werden insbesondere parallel zu einer Einschubrichtung im Bereich von Frachtraumtüren angeordnet, um ein definiertes Einschieben von Lasten tragenden Paletten in den Frachtraum des Flugzeuges zu ermöglichen. Zur Berücksichtigung von unterschiedlichen Größen der Paletten ist es bekannt, Führungselemente jeweils geeignet im Bereich des Laderaumbodens anzuordnen. Es ist ebenfalls möglich, eine Mehrzahl von Führungselementen neben- bzw. hintereinander anzuordnen und jeweils für einen aktuellen Beladungsvorgang nicht benötigte bzw. störende Leitelement zu entfernen.

Eine derartige Arbeitsweise bedingt jedoch einen hohen Arbeitsaufwand. Darüber hinaus lassen sich die Führungselemente nicht in ausreichender Weise mit einem geringen Abstand zueinander anordnen. Gerade die Ausnutzung des Frachtraumes sowie die Ermöglichung kurzer Ladezeiten bestimmt jedoch wesentlich die für eine jeweilige Beförderung anfallenden Kosten.

Aufgabe der vorliegenden Erfindung ist es daher, eine Vorrichtung der einleitend genannten Art derart zu konstruieren, daß zur Führung von Paletten unterschiedlicher Größe erforderliche Führungselemente mit einem geringen Abstand zueinander angeordnet werden können und eine automatische Versenkung eines der Führungselemente im Laderaumboden bei einer Handhabung von Paletten großer räumlicher Ausdehnung mit geringem Aufwand ermöglicht wird.

Diese Aufgabe wird erfindungsgemäß dadurch gelöst, daß quer zu einer Transportrichtung der in den Frachtraum gelangenden Paletten ein vorderes und ein hinteres verschwenkbares Führungselement hintereinander angeordnet sind, jedes der Führungselemente einen eine jeweils zugeordnete Palette bereichsweise übergreifenden Vorsprung aufweist und im Bereich von Leitflächen mit die Palette beaufschlagenden Leitrollen versehen ist, das vordere Führungselement in eine seine Leitfläche nach unten orientierende Richtung und das hintere Führungselement in eine seine Leitfläche nach oben orientierende Richtung verdrehend verschwenkbar ist und das vordere Führungselement mindestens einen in die Transportrichtung der Palette weisenden Überrollbügel aufweist, der das Führungselement bei einer Gewichtsbeaufschlagung in den Bereich eines Laderaumbodens hineinverschwenkt.

Durch die Anordnung von zwei Führungselementen hintereinander wird es ermöglicht, Paletten unterschiedlicher Größe jeweils exakt zu führen. Der Abstand der Führungselemente wird in Abhängigkeit von den unterschiedlichen Dimensionierungen der Paletten gewählt. Mit Hilfe der die Paletten übergreifenden Vorsprünge wird ein Abheben der Palette vom Laderaumboden und damit ein Verrutschen von auf den Paletten transportierter Ladung verhindert. Bei einer Führung einer kleinen Palette wird diese vom vorderen Führungselement geleitet. Bei einer Handhabung einer großen Palette gelangt diese zunächst in den Bereich des Überrollbügels und verschwenkt durch eine Gewichtsbelastung des Überrollbügels das vordere Führungselement in den Bereich des Laderaumbodens hinein. Dadurch, daß die Verschwenkung derart erfolgt, daß nach einer Durchführung der Verschwenkung die Leitfläche nach unten weist, wird eine Behinderung des hinteren Führungselementes durch diesen Verschwenkvorgang vermieden. Gleichfalls erfolgt bei einer Verschwenkung des hinteren Führungselementes durch die gewählte Verschwenkrichtung keine Beeinträchtigung des vorderen Führungselementes. Die Führungselemente lassen sich dadurch mit einem sehr geringen Abstand zueinander anordnen. Zur Vermeidung von die Führungselemente belastenden Reibungskräften sind die Leitrollen vorgesehen. Es wird somit eine Führung der Paletten ohne großen Kraftaufwand ermöglicht. Diese Herabsetzung von Kraftbelastungen ermöglicht eine sehr leichte Konstruktion der Führungselemente sowie der erforderlichen Schwenklager.

Im nachstehenden werden einige bevorzugten Merkmale der Erfindung angegeben.

Zur Gewährleistung sowohl einer einfachen Überfahrbarkeit des Überrollbügels als auch einer leichten Ausführungsform wird vorgeschlagen, daß der Überrollbügel im wesentlichen aus einem in Transportrichtung der Paletten weisenden Basissegment sowie aus sich angewinkelt zum Basissegment erstreckenden Schenkeln ausgebildet ist.

Insbesondere ist daran gedacht, daß sich die Schenkel mit einem Winkel von etwa 45 Grad zum Basissegment erstrecken.

Die Auflauffähigkeit einer Palette wird dadurch verbessert, daß die Schenkel ausgehend von einer dem hinteren Führungselement zugewandten Orientierung in Richtung auf die Leitfläche des vorderen Führungselementes schräg nach unten weisen.

Eine Verbesserung der Montageeigenschaften kann dadurch erreicht werden, daß die Führungselemente auf einem gemeinsamen Träger angeordnet sind, der die Führungselemente halternde Schwenklager trägt.

Eine universelle Montierbarkeit mit geringem Arbeitsaufwand wird dadurch erzielt, daß der Träger von Halterungselementen im Bereich von Sitzschienen fixierbar ist, die im Bereich des Laderaumbodens verlegt sind.

Zur Verringerung von Reibungskräften im Bereich der Führungselemente wird vorgeschlagen, daß im Bereich jeder der Leitflächen jeweils zwei Leitrollen angeordnet sind.

Eine Überfahrbarkeit des hinteren Führungselementes und eine ausreichende Sicherung in einer Arbeitspositionierung wird dadurch unterstützt, daß das hintere Führungselement in einer Arbeitspositionierung von einem Arretierungsbügel fixiert ist, der mit einer Rastnase eine Verriegelungskante des hinteren Führungselementes hintergreift.

Eine einfache manuelle Betätigung bzw. eine Fußbetätigung des hinteren Führungselementes kann dadurch erreicht werden, daß der Arretierungsbügel verschwenkbar angeordnet ist.

Zur Verbesserung der Betriebseigenschaften der Führungselemente wird vorgeschlagen, daß mindestens eines der Führungselemente von einer Federvorspannung beaufschlagbar ist.

In der Zeichnung sind Ausführungsbeispiele der Erfindung schematisch dargestellt. Es zeigen:

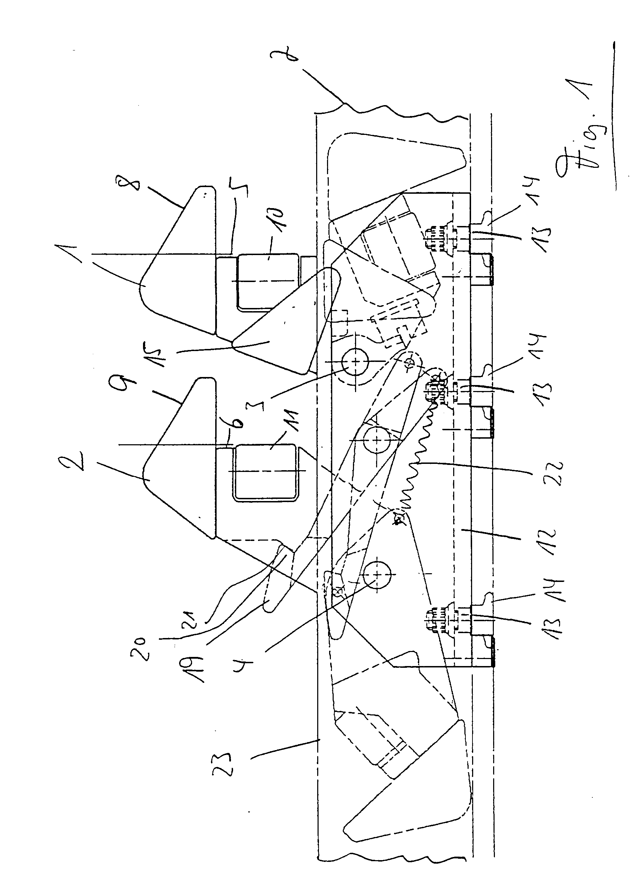

- Fig. 1: einen Längsschnitt durch zwei verschwenkbar gelagerte und hintereinander angeordnete Führungselemente, von denen das vordere Führungselement mit einem Überrollbügel versehen ist **und**

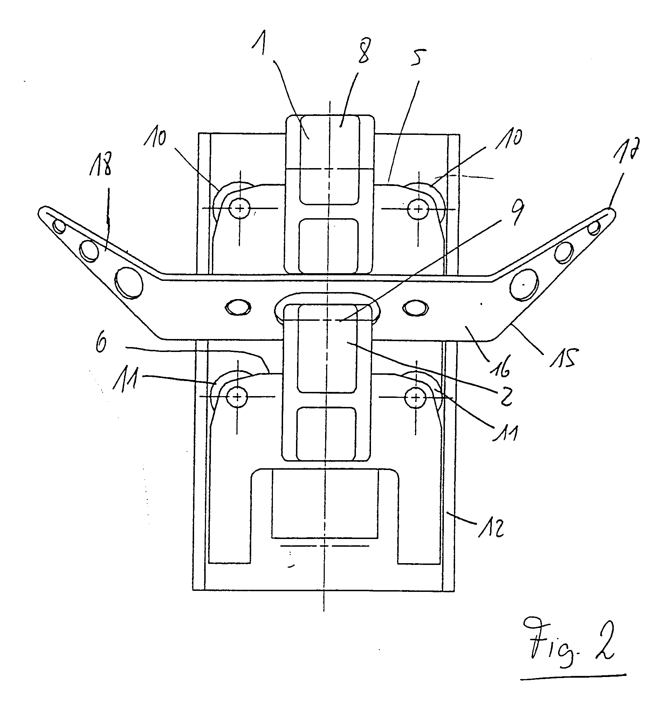

- Fig. 2: eine Draufsicht auf die Vorrichtung gemäß Figur 1.

Eine Vorrichtung zur Führung von Paletten besteht im wesentlichen aus einem vorderen Führungselement (1) und einem hinteren Führungselement (2). Das vordere Führungselement (1) weist ein Schwenklager (3) und das hintere Führungselement (2) ein Schwenklager (4) auf. In einer Arbeitspositionierung sind die Führungselemente (1,2) mit Leitflächen (5,6) im wesentlichen senkrecht zu einem Laderaumboden (7) orientiert. In einer Ruhepositionierung weist das vordere Führungselement (1) mit seiner Leitfläche (5) im wesentlichen nach unten und das hintere Führungselement (2) weist in einer Ruhepositionierung mit seiner Leitfläche (6) im wesentlichen nach oben.

Zur ausreichenden Sicherung der zu führenden Paletten gegen ein Abheben vom Laderaumboden (7) sind die Führungselemente (1,2) mit Vorsprüngen (8,9) versehen, die die Paletten bereichsweise übergreifen. Zur Verringerung von Reibkräften sind Leitrollen (10,11) vorgesehen.

Die Schwenklager (3,4) sind im Bereich eines in den Laderaumboden (7) versenkbaren Trägers (12) angeordnet, der über Halterungselemente (13) in Sitzschienen (14) des Laderaumbodens (7) fixiert werden kann. Die Halterungselemente (13) können beispielsweise als Verschraubungen ausgebildet sein.

Das vordere Führungselement (1) weist einen Überrollbügel (15) auf, der aus einem Basissegment (16) und Schenkeln (17,18) ausgebildet ist. Die Schenkel (17,18) erstrecken sich angewinkelt zum Basissegment (16). Es kann beispielsweise ein Winkel von 45 Grad realisiert werden. Ausgehend von einer dem hinteren Führungselement (2) zugewandten Ausdehnung weisen die Schenkel (17,18) in Richtung auf die Leitfläche (1) schräg nach unten und tauchen mit Endbereichen in den Laderaumboden (7) hinein. Hierdurch wird ein Auflaufen von Paletten auf den Überrollbügel (15) erleichtert.

Das hintere Führungselement (2) wird von einem Arretierungsbügel (19) in seiner Arbeitspositionierung fixiert. Der Arretierungsbügel (19) ist dazu verschwenkbar gelagert und weist eine Rastnase (20) auf. Die Rastnase (20) greift hinter eine Verriegelungskante (21) des hinteren Führungselementes (2). Durch diesen Hintergriff wird ein Abrutschen des Arretierungsbügels (19) vom hinteren Führungselement (2) verhindert. Zur Ermöglichung einer einfachen Verschwenkbarkeit des hinteren Führungselementes (2) in seine Ruhepositionierung kann ein Federelement (22) vorgesehen werden.

Bei einer Handhabung einer großen Palette wird diese zunächst in den Bereich des Überrollbügels (15) geführt und verschwenkt das vordere Führungselement (1) in den Bereich des Laderaumbodens (7) hinein. Das vordere Führungselement (1) kann hierdurch überfahren werden. Die Leitfunktionen werden vom hinteren Führungselement (2) durchgeführt. Um eine Positionierung der Palette über das hintere Führungselement (2) hinaus zu ermöglichen, kann der Arretierungsbügel (19) beispielsweise manuell oder durch Fußbetätigung aus dem Bereich der Verriegelungskante (21) herauspositioniert werden und anschließend kann das hintere Führungselement (2) in den Bereich des Laderaumbodens (7) hineinverschwenkt werden. Nach einer derartigen Verschwenkung beider Führungselemente (1,2) sind keine Elemente vorhanden, die über eine obere Begrenzung (23) des Laderaumbodens (7) hinausragen.

## Patentansprüche

1. Vorrichtung zur Führung von Paletten unterschiedlicher Größe im Bereich einer Ladefläche eines Frachtraumes eines Flugzeuges, dadurch gekennzeichnet, daß quer zu einer Transportrichtung der in den Frachtraum gelangenden Paletten ein vorderes und ein hinteres verschwenkbares Führungselement (1,2) hintereinander angeordnet sind, jedes der Führungselemente (1,2) einen eine jeweils zugeordnete Palette bereichsweise übergreifenden Vorsprung (8,9) aufweist und im Bereich von Leitflächen (5,6) mit die Palette beaufschlagenden Leitrollen (10,11) versehen ist, das vordere Führungselement (1) in eine seine Leitfläche (5) nach unten orientierende Richtung und das hintere Führungselement (2) in eine seine Leitfläche in eine nach oben weisende Richtung verdrehend verschwenkbar ist und das vordere Führungselement (1) mindestens einen in die Transportorientierung der Palette weisenden Überrollbügel (15) aufweist, der das vordere Führungselement (1) bei einer Gewichtsbeaufschlagung in den Bereich eines Laderaumbodens (7) hineinverschwenkt.

2. Vorrichtung nach Anspruch 1, dadurch gekennzeichnet, daß der Überrollbügel (15) im wesentlichen aus einem in Transportrichtung der Paletten weisenden Basissegment (16) sowie aus sich angewinkelt zum Basissegment (16) erstreckenden Schenkeln (17,18) ausgebildet ist.

3. Vorrichtung nach Anspruch 2, dadurch gekennzeichnet, daß sich die Schenkel (17,18) mit einem Winkel von etwa 45 Grad zum Basissegment (16) erstrecken.

4. Vorrichtung nach einem der Ansprüche 2 oder 3, dadurch gekennzeichnet, daß die Schenkel (17,18) ausgehend von einer dem hinteren Führungselement (2) zugewandten Orientierung in Richtung auf die Leitfläche (5) des vorderen Führungselementes (1) schräg nach unten weisen.

5. Vorrichtung nach einem der Ansprüche 1 bis 4, dadurch gekennzeichnet, daß die Führungselemente (1,2) auf einem gemeinsamen Träger (12) angeordnet sind, der die Führungselemente (1,2) halternde Schwenklager (3,4) trägt.

6. Vorrichtung nach einem der Ansprüche 4 oder 5, dadurch gekennzeichnet, daß der Träger (12) von Halterungselementen (13) im Bereich von Sitzschienen (14) fixierbar ist, die im Bereich des Laderaumbodens (7) verlegt sind.

7. Vorrichtung nach einem der Ansprüche 1 bis 6, dadurch gekennzeichnet, daß im Bereich jeder der Leitflächen (5,6) jeweils zwei Leitrollen (10,11) angeordnet sind.

8. Vorrichtung nach einem der Ansprüche 1 bis 7, dadurch gekennzeichnet, daß das hintere Führungselement (2) in einer Arbeitspositionierung von einem Arretierungsbügel (19) fixiert ist, der mit einer Rastnase (20) eine Verriegelungskante (21) des hinteren Führungselementes (2) hintergreift.

9. Vorrichtung nach Anspruch 8, dadurch gekennzeichnet, daß der Arretierungsbügel (19) verschwenkbar angeordnet ist.

10. Vorrichtung nach einem der Ansprüche 1 bis 9, dadurch gekennzeichnet, daß mindestens eines der Führungselemente (1,2) von einer Federvorspannung beaufschlagbar ist.

## Claims

1. Device for guiding pallets of varying size in the region of a loading area of a hold of an aircraft, characterized in that a front and a rear swivelling guide element (1, 2) are successively disposed at right angles to a transport direction of the pallets passing into the hold, each of the guide elements (1, 2) has a projection (8, 9) engaging over sections of an associated pallet and is provided in the region of guide surfaces (5, 6) with guide rollers (10, 11) which act upon the pallet, the front guide element (1) may be rotatably swivelled into a direction in which its guide surface (5) points downwards and the rear guide element (2) may be rotatably swivelled into a direction in which its guide surface points upwards and the front guide element (1) has at least one roll bar (15) pointing in the transport orientation of the pallet, which roll bar swivels the front guide element (1) under the action of weight into the region of a loading area floor (7).

2. Device according to claim 1, characterized in that the roll bar (15) substantially takes the form of a base segment (16), which points in the transport direction of the pallets, and limbs (17, 18) which extend at an angle from the base segment (16).

3. Device according to claim 2, characterized in that the limbs (17, 18) extend at an angle of around 45° to the base segment (16).

4. Device according to one of claims 2 or 3, characterized in that the limbs (17, 18), starting from an orientation facing towards the rear guide element (2), are directed obliquely downwards in the direction of the guide surface (5) of the front guide element (1).

5. Device according to one of claims 1 to 4, characterized in that the guide elements (1, 2) are disposed on a common carrier (12), which carries swivel bearings (3, 4) for supporting the guide elements (1, 2).

6. Device according to one of claims 4 or 5, characterized in that the carrier (12) is fastenable by means of fixing elements (13) in the region of seat rails (14) which are laid in the region of the loading area floor (7).

7. Device according to one of claims 1 to 6, characterized in that two guide rollers (10, 11) are disposed in the region of each of the guide surfaces (5, 6).

8. Device according to one of claims 1 to 7, characterized in that the rear guide element (2) is fixed in an operating position by a locking shackle (19) which engages with a detent lug (20) behind a locking edge (21) of the rear guide element (2).

9. Device according to claim 8, characterized in that the locking shackle (19) is disposed so as to be capable of swivelling.

10. Device according to one of claims 1 to 9, characterized in that at least one of the guide elements (1, 2) may be acted upon by a spring bias.

## Revendications

1. Dispositif destiné au guidage de palettes de différentes dimensions dans la zone d'une plate-forme de chargement d'une soute à fret d'un avion, caractérisé en ce que transversalement à la direction de transport des palettes accédant à la soute à fret sont disposés l'un derrière l'autre un élément de guidage pivotant avant 1 et un élément de guidage pivotant arrière 2, chacun de ces éléments de guidage (1,2) présentant une saillie (8,9) dépassant respectivement la palette à laquelle il est adjoint et chacun de ces éléments étant pourvu dans la zone des surfaces de guidage (5,6) de rouleaux de guidage (10,11) en contact avec la palette, l'élément de guidage avant (1) pouvant être pivoté par rotation dans une direction permettant d'orienter la surface de guidage (5) vers le bas et l'élément de guidage arrière (2) pouvant être pivoté par rotation dans une direction permettant d'orienter la surface de guidage (6) vers le haut, l'élément de guidage avant (1) présentant également au moins un arceau (15) dirigé dans la direction de transport de la palette et faisant pivoter l'élément de guidage avant (1) sous le fond de la soute à bagages (7) lorsque l'arceau est soumis à une charge.

2. Dispositif selon la revendication 1, caractérisé en ce que l'arceau (15) est formé principalement d'un segment de base (16) dirigé dans la direction de transport des palettes ainsi que de branches (17,18) se prolongeant de manière déviée par rapport au segment de base (16).

3. Dispositif selon la revendication 2, caractérisé en ce que les branches (17,18) sont prolongées de manière déviée en formant un angle d'environ 45° par rapport au segment de base (16).

4. Dispositif selon l'une ou l'autre des revendications 2 et 3, caractérisé en ce que les branches (17,18) suivent une direction inclinée vers le bas partant d'une orientation tournée vers l'élément de guidage arrière (2) et allant vers la surface de guidage (5) de l'élément de guidage avant (1).

5. Dispositif selon l'une ou l'autre des revendications 1 à 4, caractérisé en ce que les éléments de guidage (1,2) sont disposés sur un support commun (12) qui porte les appuis pivotants (3,4) destinés à la fixation des éléments de guidage (1,2).

6. Dispositif selon l'une ou l'autre des revendications 4 et 5, caractérisé en ce que le support (12) des éléments de fixation (13) peut être fixé dans la zone des rails d'appui (14), lesquels sont déplacés dans la zone du fond de la soute à bagages (7).

7. Dispositif selon l'une ou l'autre des revendications 1 à 6, caractérisé en ce que dans la zone de chacune des surfaces de guidage (5,6) sont disposés respectivement deux rouleaux de guidage (10,11).

8. Dispositif selon l'une ou l'autre des revendications 1 à 7, caractérisé en ce que l'élément de guidage arrière (2) est fixé dans une position de travail par un verrou d'arrêt (19), lequel s'engrène avec le bord de verrouillage (21) de l'élément de guidage arrière au moyen d'un arrêt (20).

9. Dispositif selon la revendication 8, caractérisé en ce que le verrou d'arrêt (19) est disposé de manière à pouvoir pivoter.

10. Dispositif selon l'une ou l'autre des revendications 1 à 9, caractérisé en ce que au moins un des éléments de guidage (1,2) peut être soumis à la tension d'un ressort.
